# FASCICULE DE BREVET EUROPEEN

(11) **EP 3 728 039 B1**
(45) Date de publication et mention de la délivrance du brevet: **08.09.2021**
(21) Numéro de dépôt: 18833942.8
(22) Date de dépôt: 14.12.2018
(51) Int. Cl.: B64D 27/26

(54) **DISPOSITIF DE SUSPENSION**
AUFHÄNGEVORRICHTUNG
SUSPENSION DEVICE

(30) Priorité: 20.12.2017 FR 1762663
(43) Date de publication de la demande: 28.10.2020
(73) Titulaire: SAFRAN AIRCRAFT ENGINES, 75015 Paris (FR)
(72) Inventeur: HELLEGOUARCH, Antoine, Elie, 77550 MOISSY-CRAMAYEL (FR); TESNIERE, Marc, Patrick, 77550 MOISSY-CRAMAYEL (FR)
(74) Mandataire: Ernest Gutmann - Yves Plasseraud S.A.S.
(86) Numéro de dépôt international: PCT/FR2018/053307
(87) Numéro de publication internationale: WO 2019/122634

(56) Documents cités:
- WO-A1-2013/050715
- FR-A1- 2 925 016
- FR-A1- 2 987 347

## Description

### DOMAINE

La présente invention concerne un dispositif de suspension pour une turbomachine, telle notamment qu'un turboréacteur ou un turbopropulseur d'avion.

### CONTEXTE

La demande de brevet FR 2 867 155 au nom de la Demanderesse divulgue une turbomachine fixée à un pylône par l'intermédiaire d'un ensemble de suspension comportant un dispositif de suspension amont et un dispositif de suspension aval. Le dispositif de suspension amont est fixé à un carter intermédiaire solidaire d'un carter de soufflante, le dispositif de suspension aval étant fixé à un carter d'échappement. Les deux carters sont des éléments structuraux de la turbomachine. La demande de brevet FR 2 987 347 A1 divulgue un pylône avec une suspension avant pourvue d'une bielle centrale entre deux bielles latérales et avec une suspension arrière comprenant un palonnier relié à deux bielles de reprise de poussée.

Les dispositifs de suspension ont pour fonction d'assurer la transmission des efforts mécaniques entre la turbomachine et la structure de l'avion. Ces efforts sont notamment la poussée générée par la turbomachine, orientée selon l'axe de la turbomachine noté X, les charges aérodynamiques latérales, orientées selon un axe noté Y et le poids de la turbomachine, orientée verticalement selon un axe noté Z. Les axes X, Y et Z sont orthogonaux deux à deux.

Il existe actuellement un besoin de limiter les dimensions des turbomachines, tout en logeant un nombre important d'équipements. Afin de pouvoir répondre à ces différentes contraintes, il est nécessaire de réduire également l'encombrement des dispositifs de suspension.

### RESUME DE L'INVENTION

L'invention vise à répondre à cette problématique, de manière simple, fiable et peu onéreuse.

A cet effet, la présente invention concerne un dispositif de suspension pour une turbomachine comportant :
- un corps destiné à être fixé à une partie fixe d'un aéronef, s'étendant selon un axe longitudinal prévu pour être parallèle à un axe d'arbre moteur de la turbomachine une fois le dispositif de suspension relié à la turbomachine,
- une première bielle et une deuxième bielle situées dans un même plan transversal perpendiculaire à l'axe longitudinal du corps, comportant chacune une première extrémité articulée par rapport au corps, et une seconde extrémité destinée à être articulée sur une première partie de la turbomachine,
- une troisième bielle articulée sur le corps entre les premières extrémités des première et deuxième bielles et destinée à être articulée sur la première partie de la turbomachine, entre les secondes extrémités des première et deuxième bielles,
- un palonnier articulé sur le corps,
- une quatrième bielle et une cinquième bielle s'étendant chacune selon un axe d'extension et comportant chacune une première extrémité articulée sur le palonnier et une seconde extrémité destinée à être articulée sur une deuxième partie de la turbomachine,
- les points d'intersection entre les axes d'extension des quatrième et cinquième bielles et le plan transversal étant situés entre la première bielle et la deuxième bielle, et de part et d'autre de la troisième bielle selon une direction transversale.

Le terme circonférentiel et le terme radial sont définis par référence à l'axe du corps ou à l'axe de la turbomachine.

Le corps est destiné à être fixé à une partie fixe d'un aéronef, telle par exemple qu'un mât ou qu'un pylône d'un avion.

Les première et deuxième bielles peuvent être conçues pour reprendre les efforts latéraux ou les efforts verticaux. Les efforts latéraux peuvent notamment être exercés lorsqu'une rafale de vent vient appliquer un effort latéral sur la turbomachine, c'est-à-dire un effort dirigé horizontalement, soit en direction du fuselage de l'avion, soit à l'opposé du fuselage. Les efforts verticaux sont principalement dus au poids de la turbomachine.

La troisième bielle peut être conçue pour reprendre le couple exercé par la turbomachine, autour de son axe.

Les quatrième et cinquième bielles peuvent être conçues pour reprendre les efforts de poussée de la turbomachine, c'est-à-dire les efforts dirigés selon l'axe de la turbomachine et du corps.

Un tel dispositif permet de remplir les contraintes de reprise d'efforts de la turbomachine tout en offrant une structure compacte. En effet, l'orientation particulière des quatrième et cinquième bielles permet de limiter l'encombrement de l'ensemble de manière à faciliter l'intégration des équipements environnants sur la turbomachine.

Le dispositif de suspension peut comporter des moyens de reprise d'efforts reliant avec jeu le palonnier et le corps.

Les moyens de reprise d'efforts peuvent être aptes à maintenir le palonnier par rapport au corps en cas de rupture de la quatrième bielle ou de la cinquième bielle.

Les moyens de reprise d'efforts peuvent comporter :
- un premier axe de reprise d'efforts reliant avec jeu le corps et une première zone du palonnier, et
- un second axe de reprise d'efforts reliant avec jeu le corps et une seconde zone du palonnier, les premier et second axes de reprise d'efforts étant situés de part et d'autre de l'axe du corps.

Le jeu peut être formé entre chaque axe de reprise d'efforts et le palonnier, et/ou entre chaque axe de reprise d'efforts et le corps.

De préférence, le jeu est formé entre chaque axe de reprise d'efforts et la zone correspondante du palonnier.

Le corps peut comporter une platine destinée à être fixée à la partie fixe de l'aéronef et parallèle à l'axe du corps, le corps comportant en outre une poutre solidaire d'une zone amont de la platine et sur laquelle les première et deuxième bielles sont articulées.

Le corps peut comporter en outre une excroissance faisant saillie par rapport à une face de la platine du même côté que la poutre, solidairement à une zone aval de la platine.

L'excroissance peut ainsi s'étendre verticalement vers le bas. La platine peut s'étendre dans un plan horizontal.

La platine peut comporter une zone évidée située en regard de l'articulation du palonnier sur le corps. La zone évidée peut permettre le passage d'un outil.

Les quatrième et cinquième bielles peuvent être courtes en ce qu'elle ne s'étendent pas au-delà du corps, et en particulier de la platine, en vue de dessus. En d'autre termes, la projection des quatrième et cinquième bielles dans le plan de la platine peut être majoritairement contenue dans la zone délimitée par la platine. Ceci permet de limiter l'encombrement du dispositif de suspension.

Les axes de reprise d'efforts peuvent être montés dans la platine et peuvent s'étendre perpendiculairement à la platine.

Les axes de reprise d'efforts peuvent être montés dans l'excroissance du corps et peuvent s'étendre en formant un angle compris entre 0° et 15° par rapport à un plan parallèle à la platine.

Le palonnier peut être monté de façon articulé sur l'excroissance du corps.

Le palonnier peut comporter au moins une ouverture médiane, l'excroissance du corps comportant au moins une ouverture, un axe d'articulation étant monté dans lesdites ouvertures du palonnier et de l'excroissance, par exemple sans jeu.

La troisième bielle peut comporter une première branche et une seconde branche, lesdites branches étant agencées entre elles de manière à former un V, les deux branches comportant chacune une première extrémité commune auxdites branches, la première extrémité commune étant destinée à être articulée sur la première partie de la turbomachine, chaque branche comportant une seconde extrémité libre articulée sur le corps, la seconde extrémité de la première branche étant articulée avec jeu sur le corps, la seconde extrémité de la seconde branche étant articulée sans jeu sur le corps.

Ainsi, en fonctionnement normal, seule l'une des branches, à savoir la seconde branche, est apte à reprendre le couplé généré par la turbomachine. En cas de rupture de ladite branche, le jeu est rattrapé et la première branche est apte à reprendre le couple généré par la turbomachine, en remplacement de la seconde branche.

La première branche est ainsi apte à former une branche de sécurité.

Les termes « sans jeu » signifient qu'aucun jeu spécifique de sécurité n'a pas été prévu. Bien évidemment, il peut tout de même exister un jeu faible nécessaire au montage.

Le corps peut comporter une première branche et une seconde branche s'étendant de façon oblique l'une par rapport à l'autre, la première extrémité de la première bielle étant articulée sur la première branche du corps, par exemple sans jeu, la première extrémité de la seconde bielle étant articulée sur la seconde branche, par exemple sans jeu.

L'invention peut également comporter un ensemble propulsif, pour aéronef, caractérisé en ce qu'il comprend une turbomachine dont une partie amont est suspendue à une partie fixe de l'aéronef par un dispositif de suspension du type précité, le dispositif de suspension appartenant audit ensemble propulsif, et en ce que la première bielle et la deuxième bielle sont disposées à l'amont du dispositif de suspension.

Un carter au moins partiellement cylindrique s'étendant selon l'axe d'arbre moteur de la turbomachine peut former la première partie de la turbomachine sur laquelle sont articulées les première, deuxième, et troisième bielles, et un carter au moins partiellement annulaire s'étendant selon un plan perpendiculaire à l'axe d'arbre moteur de la turbomachine peut former la deuxième partie de la turbomachine sur laquelle sont articulées la quatrième bielle et la cinquième bielle.

L'invention peut également concerner un aéronef comportant une partie fixe, telle par exemple qu'un pylône, une turbomachine, et des moyens de suspension de la turbomachine à ladite partie fixe, les moyens de suspension comportant au moins un dispositif de suspension du type précité ou au moins un ensemble propulsif du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique illustrant une partie d'une turbomachine fixée à un pylône d'un aéronef, par l'intermédiaire d'un ensemble de suspension selon l'invention,
- les figures 2 à 5 sont des vues illustrant un dispositif de suspension selon une première forme de réalisation de l'invention, en particulier,

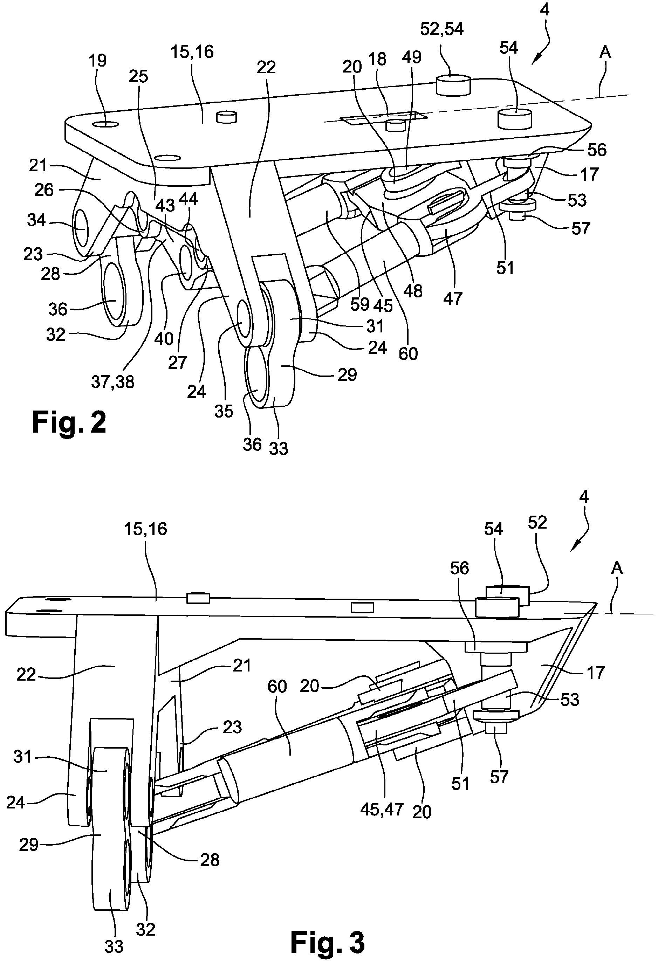

- la figure 2 est une vue en perspective du dispositif,
- la figure 3 est une vue en perspective, de côté, du dispositif,

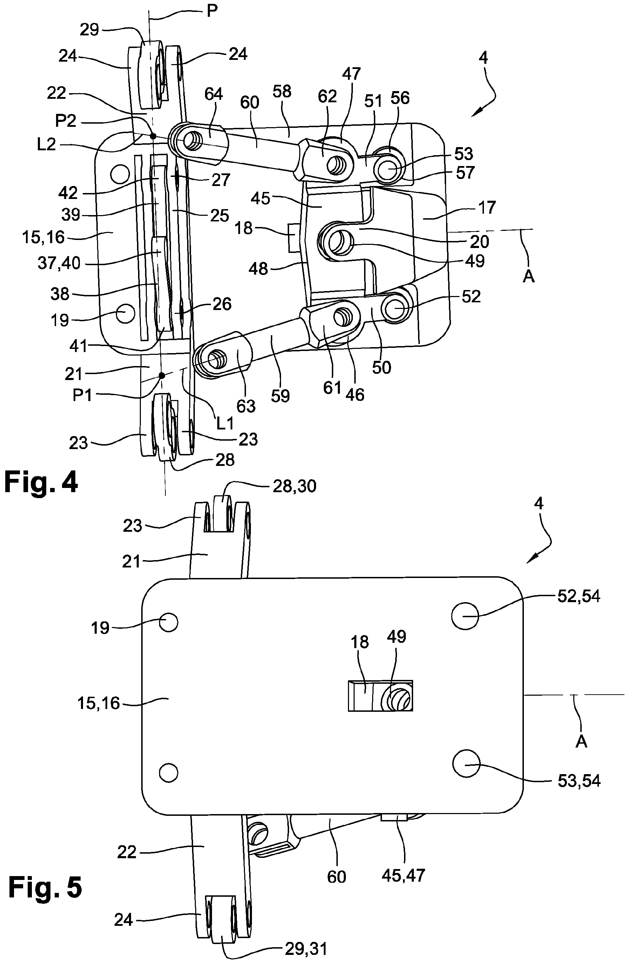

- la figure 4 est une vue en perspective, de dessous, du dispositif,
- la figure 5 est une vue en perspective, de dessus, du dispositif,

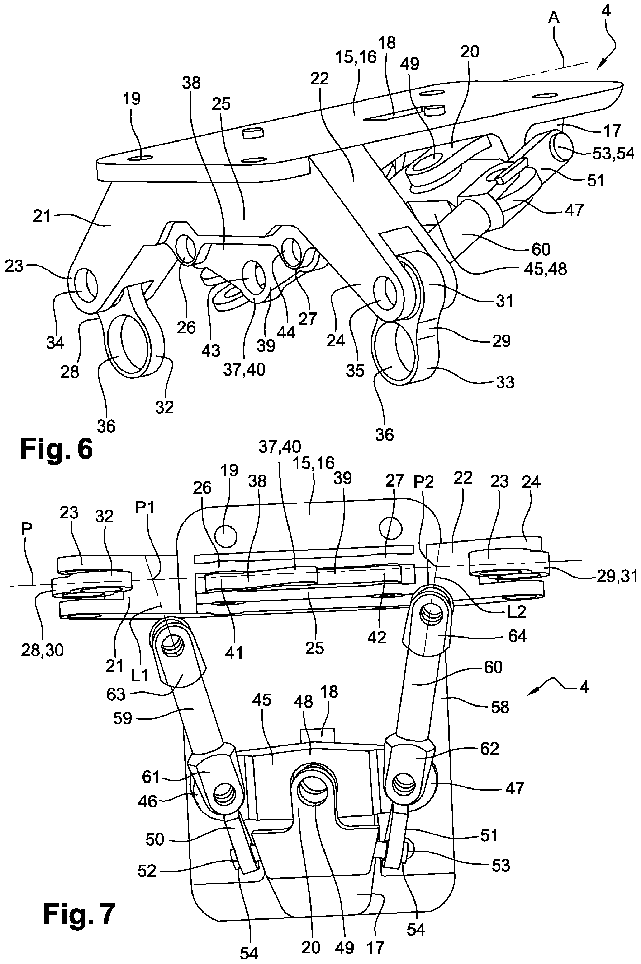

- les figures 6 à 9 sont des vues illustrant un dispositif de suspension selon une seconde forme de réalisation de l'invention, en particulier,
- la figure 6 est une vue en perspective du dispositif,
- la figure 7 est une vue en perspective, de dessous, du dispositif,

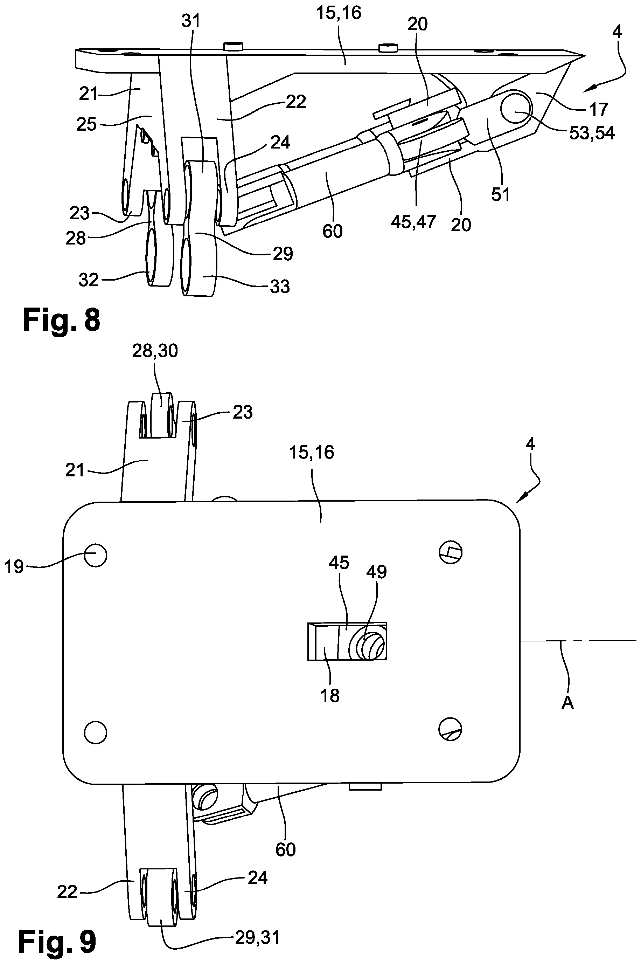

- la figure 8 est une vue en perspective, de côté, du dispositif,
- la figure 9 est une vue en perspective, de dessus, du dispositif.

### DESCRIPTION DETAILLEE

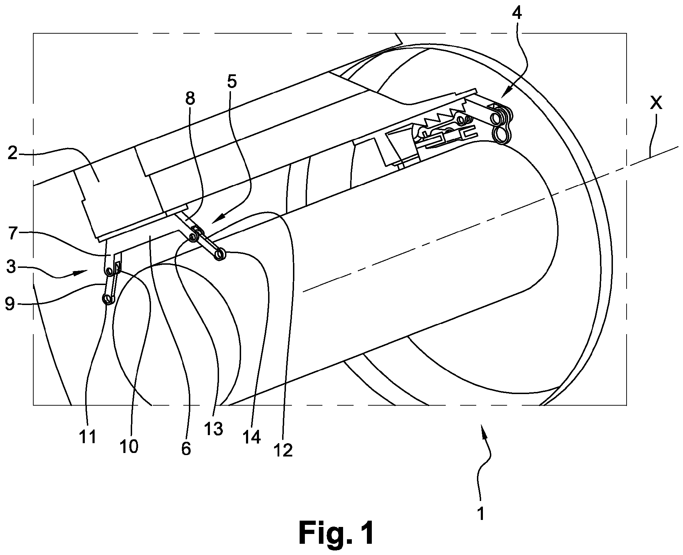

La figure 1 illustre une turbomachine 1 comprenant un arbre moteur d'axe X, montée sur un pylône 2 d'un aéronef à l'aide d'un ensemble de suspension 3. Ledit ensemble comporte un dispositif de suspension amont 4 et un dispositif de suspension aval 5, la direction aval étant orientée vers la direction de l'écoulement du flux d'air traversant la turbomachine en fonctionnement. Le dispositif de suspension aval 5 comporte un corps 6 se présentant sous la forme d'une poutre comportant une première extrémité latérale 7 et une seconde extrémité latérale 8, situées de part et d'autre d'un plan vertical passant par l'axe X d'arbre moteur de la turbomachine 1. Le corps 6 est fixée au pylône 2, par exemple par vissage. Chaque extrémité latérale 7, 8 de la poutre 6 comporte une chape, chaque chape comportant deux flancs écartés l'un de l'autre. Le dispositif de suspension aval 5 comporte en outre une première bielle 9 comportant une première extrémité 10 articulée sur la première extrémité latérale 7 du corps 6, et une seconde extrémité 11 articulée sur un carter de la turbomachine 1, par exemple un carter d'échappement de la turbomachine 1. La première extrémité 10 de la première bielle 9 est engagée entre les flancs de la chape correspondante et est articulée par l'intermédiaire d'un axe de pivot non représenté, engagé sans jeu dans des trous de la chape et de la première extrémité 10 de la première bielle 9. Les termes « sans jeu » signifient qu'aucun jeu spécifique n'a été prévu. Bien évidemment, il peut tout de même exister un jeu faible nécessaire au montage.

Le dispositif de suspension aval 5 comporte de plus une seconde bielle 12 comportant une première extrémité 13 articulée sur la seconde extrémité latérale 8 du corps 6, et une seconde extrémité 14 articulée sur ledit carter de la turbomachine. Comme précédemment, la première extrémité 13 de la seconde bielle 12 est engagée entre les flancs de la chape correspondante et est articulée par l'intermédiaire d'un axe de pivot non représenté, engagé sans jeu dans des trous de la chape et de la première extrémité 13 de la seconde bielle 12.

Le dispositif de suspension amont 4, visible de façon sommaire à la figure 1, est mieux visible aux figures 2 à 5. Celui-ci comporte un corps 15 s'étendant selon un axe longitudinal A parallèle à l'axe X d'arbre moteur de la turbomachine 1. Le corps 15 comporte une platine 16 s'étendant dans un plan parallèle à l'axe longitudinal A du corps 15, le corps 15 comportant une excroissance 17 s'étendant perpendiculairement depuis la zone aval de la platine 16, c'est-à-dire radialement vers l'intérieur par référence à l'axe X d'arbre moteur de la turbomachine 1. La platine 16 comporte une zone évidée 18 et des trous 19 servant à l'engagement de vis permettant la fixation de la platine 16 au pylône 2 de l'aéronef.

Une chape s'étend depuis ladite excroissance 17, ladite chape étant formée de deux flancs 20 écartés l'un de l'autre. Les flancs 20 s'étendent selon l'axe A du corps 15, vers l'amont, et radialement vers l'intérieur. Les flancs 20 forment un angle préférablement compris entre 15° et 45° par rapport au plan de la platine 16.

Une poutre 25, rendue solidaire d'une zone amont de la platine 16, comprend une première branche 21 et une seconde branche 22 qui sont situées au niveau de bords latéraux de la platine 16 et s'étendent dans un plan perpendiculaire à l'axe A du corps 15, de part et d'autre de l'axe A. Chaque branche 21, 22 s'étend radialement vers l'intérieur et latéralement à l'opposé de l'autre branche.

L'extrémité libre de chaque branche 21, 22, c'est-à-dire l'extrémité radialement interne de chaque branche 21, 22, comporte une chape formée de deux flancs 23, 24 décalés l'un de l'autre.

La poutre 25 comporte une partie médiane sur laquelle sont formées une première chape 26 et une seconde chape 27, situées de part et d'autre de l'axe A du corps 15. Comme précédemment, chaque chape 26, 27 est formée de deux flancs décalés l'un par rapport à l'autre.

Le dispositif de suspension comporte en outre une première bielle 28 et une seconde bielle 29 comportant chacune une première extrémité 30, 31, ou extrémité supérieure, et une seconde extrémité 32, 33, ou extrémité inférieure. La première extrémité 30 de la première bielle 28 est engagée entre les flancs 23 de la chape de la première branche 21 et est articulée sur ladite chape par l'intermédiaire d'un axe de pivot non représenté, engagé sans jeu dans des trous 34 desdits flancs 23 et de ladite première bielle 28. La première extrémité 31 de la seconde bielle 29 est engagée entre les flancs 24 de la chape de la seconde branche 22 et est articulée sur ladite chape par l'intermédiaire d'un axe de pivot non représenté, engagé sans jeu dans des trous 35 desdits flancs 24 et de ladite seconde bielle 29.

Les secondes extrémités 32, 33 des première et seconde bielles 28, 29 sont articulées sur un carter de la turbomachine 1, par l'intermédiaire d'axes de pivot non représentés, engagés dans des trous 36 des secondes extrémités 32, 33 desdites bielles 28, 29, notamment. Lesdits axes de pivots sont orientés parallèlement à l'axe du corps 15.

Le dispositif de suspension amont 4 comporte de plus une troisième bielle 37 comprenant une première branche 38 et une seconde branche 39, lesdites branches 38, 39 étant agencées entre elles de manière à former un V. Lesdites branches 38, 39 comportent chacune une première extrémité 40 ou extrémité inférieure, commune auxdites branches 38, 39, chaque branche 38, 39 comportant une seconde extrémité 41, 42 (figure 4), ou extrémité supérieure.

La première extrémité commune 40 est articulée sur le carter de la turbomachine 1, par l'intermédiaire d'un axe de pivot engagé sans jeu dans un trou 43 de la première extrémité 40 notamment. Ledit axe de pivot est parallèle à l'axe du corps 15.

La seconde extrémité 41 de la première branche 38 est articulée avec jeu sur la première chape 26 de la partie médiane de la poutre 25, par l'intermédiaire d'un axe de pivot sans jeu engagé dans des trous 44 de la seconde extrémité 41 de la première branche 38 et des flancs de la première chape 26 de la partie médiane de la poutre 25.

La seconde extrémité 42 de la seconde branche 39 est articulée avec jeu sur la seconde chape 27 de la partie médiane de la poutre 25, par l'intermédiaire d'un axe de pivot engagé sans jeu dans des trous de la seconde extrémité 42 de la seconde branche 39 et des flancs de la seconde chape 27 de la partie médiane de la poutre 25.

Les axes de pivot précités sont parallèles à l'axe du corps 15.

Le dispositif de suspension amont 4 comporte également un palonnier 45. Le palonnier 45 s'étend selon un axe perpendiculaire à l'axe du corps 15 et comporte une première extrémité latérale 46 et une seconde extrémité latérale 47, situées de part et d'autre de l'axe du corps 15, et une zone médiane 48. La zone médiane 48 du palonnier 45 est engagée entre les flancs 20 de la chape de l'excroissance 17 du corps 15 et est montée articulée dans ladite chape par l'intermédiaire d'un axe de pivot non représenté, engagé sans jeu dans des trous 49 desdits flancs de la chape et de la zone médiane 48. L'axe de pivot est incliné par rapport à l'axe vertical, c'est-à-dire l'axe perpendiculaire au plan de la platine 16, d'un angle préférablement compris entre 15° et 45°.

La zone évidée 18 de la platine 16 est située en regard de l'articulation du palonnier 45 sur le corps 15. La zone évidée 18 est destinée à permettre le passage d'un outil.

Le palonnier 45 comporte en outre un premier doigt 50 et un second doigt 51 s'étendant respectivement vers l'aval depuis la première extrémité latérale 46 et depuis la seconde extrémité latérale 47 du palonnier 45. Un premier axe de reprise d'efforts 52 est engagé sans jeu dans la platine 16 et est engagé avec jeu dans le premier doigt 50 du palonnier 45. Un second axe de reprise d'efforts 53 est engagé sans jeu dans la platine 16 et est engagé avec jeu dans le second doigt 51 du palonnier 45.

Chaque axe de reprise d'efforts 52, 53 comporte une tête élargie 54 en appui sur la surface supérieure de la platine 16, une première zone filetée coopérant avec un premier écrou 55, et une seconde zone filetée coopérant avec un second écrou 56. Pour des raisons de montage, la première zone filetée présente un diamètre plus important que la seconde zone filetée. Le premier écrou 55 vient en appui sur la surface inférieure 58 de la platine 16, le second écrou 56 étant vissé à l'extrémité inférieure de l'axe de reprise d'efforts 52, 53 correspondant de manière à empêcher le retrait du palonnier 45.

Le dispositif de suspension amont 4 comporte en outre une quatrième bielle 59 et une cinquième bielle 60, rectilignes, comportant chacune une première extrémité 61, 62 et une deuxième extrémité 63, 64 (figure 4). Chaque extrémité 61, 62, 63, 64 comporte une chape comprenant deux flancs écartés l'un de l'autre.

La chape de la première extrémité 61 de la quatrième bielle 59 est montée articulée sur la première extrémité latérale 46 du palonnier 45, par l'intermédiaire d'un axe de pivot non représenté, engagé sans jeu dans des trous de la chape correspondante et du palonnier 45. La chape de la première extrémité 62 de la cinquième bielle 60 est montée articulée sur la seconde extrémité latérale 47 du palonnier 45, par l'intermédiaire d'un axe de pivot non représenté, engagé sans jeu dans des trous de la chape correspondante et du palonnier 45. Lesdits axes de pivot sont perpendiculaires au plan du palonnier 45, c'est-à-dire sont inclinés par rapport à l'axe vertical, d'un angle préférablement compris entre 15° et 45°.

Les secondes extrémités 63, 64 des bielles 59, 60 sont articulées sur le carter de la turbomachine 1, par l'intermédiaire d'axes de pivot non représentés, engagés dans des trous des chapes correspondantes notamment.

Les zones d'articulation des première et seconde bielles 28, 29 sur le corps 15 sont décalées latéralement ou circonférentiellement l'une par rapport à l'autre de part et d'autre de l'axe du corps 15, les secondes extrémités 63, 64 des quatrième et cinquième bielles 59, 60 étant situées circonférentiellement entre les zones d'articulation des première et seconde bielles 28, 29. Le terme circonférentiel est défini par référence à l'axe de la turbomachine 1.

Les première, seconde et troisième bielles 28, 29, 37 sont situées dans un même plan transversal P perpendiculaire à l'axe longitudinal A du corps (figure 4). Les points d'intersection P1, P2 entre les axes d'extension L1, L2 des quatrième et cinquième bielles 59, 60 avec ledit plan transversal P sont ainsi situés circonférentiellement entre la première bielle 28 et la deuxième bielle 29, et de part et d'autre de la troisième bielle 37 selon la direction transversale.

Les première et deuxième bielles 28, 29 sont conçues pour reprendre les efforts latéraux ou les efforts verticaux. Les efforts latéraux peuvent notamment être exercés lorsqu'une rafale de vent vient appliquer un effort latéral sur la turbomachine 1, c'est-à-dire un effort dirigé horizontalement, soit en direction du fuselage de l'avion, soit à l'opposé du fuselage. Les efforts verticaux sont principalement dus au poids de la turbomachine 1.

La troisième bielle 37 est conçue pour reprendre le couple exercé par la turbomachine 1, autour de son axe X. En fonctionnement normal, seule l'une des branches 38, 39 de la troisième bielle 37, à savoir la seconde branche 39, est apte à reprendre le couplé généré par la turbomachine 1. En cas de rupture de ladite seconde branche 39, le jeu entre la première branche 38 et le corps 15 est rattrapé et la première branche 38 est apte à reprendre le couple généré par la turbomachine 1, en remplacement de la seconde branche 39. La première branche 38 est ainsi apte à former une branche de sécurité.

Les quatrième et cinquième bielles 59, 60 sont conçues pour reprendre les efforts de poussée de la turbomachine 1, c'est-à-dire les efforts dirigés selon l'axe X de la turbomachine 1 et du corps 15.

Un tel dispositif de suspension 4 permet de remplir les contraintes de reprise d'efforts de la turbomachine 1 tout en offrant une structure compacte. En effet, l'orientation particulière des quatrième et cinquième bielles 59, 60 permet de limiter l'encombrement du dispositif 4 de manière à faciliter l'intégration des équipements environnants sur la turbomachine 1.

Par ailleurs, les axes de reprise d'efforts 52, 53 sont aptes à maintenir le palonnier 45 par rapport au corps 15 en cas de rupture de la quatrième bielle 59 ou de la cinquième bielle 60.

Les figures 6 à 9 illustrent un dispositif de suspension amont selon une autre forme de réalisation de l'invention, qui diffère de celle exposée précédemment en ce que les axes de reprise d'efforts 52, 53 sont orientés parallèlement au plan de la platine et sont engagés avec jeu dans les doigts 50, 51 du palonnier 45, et sans jeu dans l'excroissance, respectivement de part et d'autre de l'excroissance 17. Chaque axe de reprise d'effort 52, 53 comporte une tête élargie 54, en appui sur le doigt 50, 51 correspondant.

Les axes de reprise d'effort 52, 53 sont alors dépourvus d'écrou. Dans la forme de réalisation représentée ici, ils peuvent former un angle l'un par rapport à l'autre. En d'autres termes, les axes de reprise d'efforts ne sont pas nécessairement orientés selon un même axe, perpendiculaire à l'axe A du corps bien qu'une telle configuration puisse être envisagée.

Comme précédemment, les axes de reprise d'efforts 52, 53 sont aptes à maintenir le palonnier 45 par rapport au corps 15 en cas de rupture de la quatrième bielle 59 ou de la cinquième bielle 60.

## Revendications

1. Dispositif de suspension (4) pour une turbomachine (1) comportant :
- un corps (15) destiné à être fixé à une partie fixe (2) d'un aéronef, s'étendant selon un axe longitudinal (A) prévu pour être parallèle à un axe (X) d'arbre moteur de la turbomachine (1) une fois le dispositif de suspension (4) relié à la turbomachine,
- une première bielle (28) et une deuxième bielle (29) situées dans un même plan transversal (P) perpendiculaire à l'axe longitudinal (A) du corps, comportant chacune une première extrémité (30, 31) articulée par rapport au corps (15), et une seconde extrémité (32, 33) destinée à être articulée sur une première partie de la turbomachine (1),
- une troisième bielle (37) articulée sur le corps (15) entre les premières extrémités (30, 31) des première et deuxième bielles (28, 29) et destinée à être articulée sur la première partie de la turbomachine (1), entre les secondes extrémités (32, 33) des première et deuxième bielles (28, 29),
- un palonnier (45) articulé sur le corps (15),
- une quatrième bielle (59) et une cinquième bielle (60) s'étendant chacune selon un axe d'extension (L1, L2) et comportant chacune une première extrémité (61, 62) articulée sur le palonnier (45) et une seconde extrémité (63, 64) destinée à être articulée sur une deuxième partie de la turbomachine (1),
- les points d'intersection (P1, P2) entre les axes d'extension (L1, L2) des quatrième et cinquième bielles (59, 60) et le plan transversal (P) étant situés entre la première bielle (28) et la deuxième bielle (29), et de part et d'autre de la troisième bielle (37) selon une direction transversale.

2. Dispositif de suspension (4) selon la revendication 1, **caractérisé en ce qu'**il comporte des moyens de reprise d'efforts (52, 53) reliant avec jeu le palonnier (45) et le corps (15).

3. Dispositif de suspension (4) selon la revendication 2, **caractérisé en ce que** les moyens de reprise d'efforts comportent :
- un premier axe de reprise d'efforts (52) reliant avec jeu le corps (15) et une première zone (50) du palonnier (45), et
- un second axe de reprise d'efforts (53) reliant avec jeu le corps (15) et une seconde zone (51) du palonnier (45), les premier et second axes de reprise d'efforts (52, 53) étant situés de part et d'autre de l'axe (A) du corps (15).

4. Dispositif de suspension (4) selon l'une des revendications 1 à 3, **caractérisé en ce que** le corps (15) comporte une platine (16) destinée à être fixée à la partie fixe (2) de l'aéronef et parallèle à l'axe (A) du corps (15), le corps (15) comportant en outre une poutre (25) solidaire d'une zone amont de la platine et sur laquelle les première et deuxième bielles (28, 29) sont articulées.

5. Dispositif de suspension (4) selon la revendication 4, **caractérisé en ce que** le corps (15) comporte en outre une excroissance (17) faisant saillie par rapport à une face de la platine (16) du même côté que la poutre (25), solidairement à une zone aval de la platine.

6. Dispositif de suspension (4) selon la revendication 4 ou 5 en combinaison avec la revendication 3, **caractérisé en ce que** les axes de reprise d'efforts (52, 53) sont montés dans la platine (16) et s'étendent perpendiculairement à la platine (16).

7. Dispositif de suspension (4) selon la revendication 4 ou 5 en combinaison avec la revendication 3, **caractérisé en ce que** les axes de reprise d'efforts (52, 53) sont montés dans l'excroissance (17) du corps (15) et s'étendent en formant un angle compris entre 0° et 15° par rapport à un plan parallèle à la platine (16).

8. Dispositif de suspension (4) selon l'une des revendications 5 à 7, **caractérisé en ce que** le palonnier (45) est monté de façon articulée sur l'excroissance (17) du corps (15).

9. Dispositif de suspension (4) selon l'une des revendications 1 à 8, **caractérisé en ce que** la troisième bielle (37) comporte une première branche (38) et une seconde branche (39), lesdites branches (38, 39) étant agencées entre elles de manière à former un V, les deux branches (38, 39) comportant chacune une première extrémité (40) commune auxdites branches (38, 39), la première extrémité commune (40) étant destinée à être articulée sur la première partie de la turbomachine (1), chaque branche (38, 39) comportant une seconde extrémité libre (41, 42) articulée sur le corps (15), la seconde extrémité (41) de la première branche (38) étant articulée avec jeu sur le corps (15), la seconde extrémité (42) de la seconde branche (39) étant articulée sans jeu sur le corps (15).

10. Ensemble propulsif pour aéronef, **caractérisé en ce qu'**il comprend une turbomachine (1) dont une partie amont est suspendue à une partie fixe (2) de l'aéronef par un dispositif de suspension (4) selon l'une des revendications 1 à 9, le dispositif de suspension (4) appartenant audit ensemble propulsif, et **en ce que** la première bielle (28) et la deuxième bielle (29) sont disposées à l'amont du dispositif de suspension.

11. Ensemble propulsif selon la revendication 10, **caractérisé en ce qu'**un carter au moins partiellement cylindrique s'étendant selon l'axe (X) d'arbre moteur de la turbomachine forme la première partie de la turbomachine sur laquelle sont articulées les première, deuxième, et troisième bielles (28, 29, 37), et **en ce qu'**un carter au moins partiellement annulaire s'étendant selon un plan perpendiculaire à l'axe (X) d'arbre moteur de la turbomachine forme la deuxième partie de la turbomachine sur laquelle sont articulées la quatrième bielle (59) et la cinquième bielle (60).

## Patentansprüche

1. Aufhängungsvorrichtung (4) für eine Turbomaschine (1), umfassend:
- einen Körper (15), der dafür bestimmt ist, an einem festen Teil (2) eines Luftfahrzeugs befestigt zu sein, sich entlang einer Längsachse (A) erstreckt, die dazu bestimmt ist, parallel zu einer Antriebs-Wellenachse (X) der Turbomaschine (1) zu sein, nachdem die Aufhängungsvorrichtung (4) an die Turbomaschine angeschlossen ist,
- eine erste Pleuelstange (28) und eine zweite Pleuelstange (29), die in derselben Querebene (P) lotrecht zur Längsachse (A) des Körpers angeordnet sind; wobei jede ein erstes Ende (30, 31), das in Bezug auf den Körper (15) artikuliert ist, und ein zweites Ende (32, 33), das dazu bestimmt ist, auf einem ersten Teil der Turbomaschine (1) artikuliert zu sein, umfasst,
- eine dritte Pleuelstange (37), die auf dem Körper (15) zwischen den ersten Enden (30, 31) der ersten und der zweiten Pleuelstange (28, 29) artikuliert und dazu bestimmt ist, auf dem ersten Teil der Turbomaschine (1) zwischen den zweiten Enden (32, 33) der ersten und der zweiten Pleuelstange (28, 29) artikuliert zu sein,
- ein am Körper (15) gelenkig angebrachtes Seitenruder (45),
- eine vierte Pleuelstange (59) und eine fünfte Pleuelstange (60), die sich jeweils entlang einer Erweiterungsachse (L1, L2) erstrecken und jeweils ein erstes Ende (61, 62), das auf dem Seitenruder (45) artikuliert ist, und ein zweites Ende (63, 64), das dazu bestimmt ist, auf einem zweiten Teil der Turbomaschine (1) artikuliert zu sein, umfassen,
- wobei die Schnittpunkte (P1, P2) zwischen den Erweiterungsachsen (L1, L2) der vierten und fünften Pleuelstangen (59, 60) und die Querebene (P) zwischen der ersten Pleuelstange (28) und der zweiten Pleuelstange (29) und auf jeder Seite der dritten Pleuelstange (37) in einer Querrichtung angeordnet sind.

2. Aufhängungsvorrichtung (4) gemäß Anspruch 1, **dadurch gekennzeichnet, dass** sie Mittel (52, 53) zum Aufnehmen von Kräften, Anschließen des Seitenruders (45) und des Körpers (15) mit Spiel umfasst.

3. Aufhängungsvorrichtung (4) gemäß Anspruch 2, **dadurch gekennzeichnet, dass** das Mittel zum Aufnehmen von Kräften umfasst:
- - einen ersten Kraftaufnahme-Stift (52), der den Körper (15) und einen ersten Bereich (50) des Seitenruders (45) mit Spiel anschließt, und
- - einen zweiten Kraftaufnahme-Stift (53), der den Körper (15) mit einem Spiel und einen zweiten Bereich (51) des Seitenruders (45) anschließt, wobei der erste und der zweite Kraftaufnahme-Stift (52, 53) auf jeder Seite der Achse (A) des Körpers (15) angeordnet sind.

4. Aufhängungsvorrichtung (4) gemäß einem der Ansprüche 1 bis 3, **dadurch gekennzeichnet, dass** der Körper (15) eine Platte (16) umfasst; die dazu bestimmt ist, an dem festen Teil (2) des Luftfahrzeugs und parallel zu der Achse (A) des Körpers (15) befestigt zu sein, wobei der Körper (15) weiterhin einen Träger (25) umfasst, der fest mit einer vorgeschalteten Zone der Platte befestigt ist und auf dem die erste und die zweite Pleuelstange (28, 29) artikuliert sind.

5. Aufhängungsvorrichtung (4) gemäß Anspruch 4, **dadurch gekennzeichnet, dass** der Körper (15) weiterhin einen Vorsprung (17) umfasst, der von einer Seite der Platte (16) auf derselben Seite wie der Träger (25) hervorspringt, der fest mit einer nachgeschalteten Zone der Platte verbunden ist.

6. Aufhängungsvorrichtung (4) gemäß Anspruch 4 oder 5 in Kombination mit Anspruch 3, **dadurch gekennzeichnet, dass** die Kraftaufnahme-Stifte (52, 53) in der Platte (16) montiert sind und sich lotrecht zur Platte (16) erstrecken.

7. Aufhängungsvorrichtung (4) gemäß Anspruch 4 oder 5 in Kombination mit Anspruch 3, **dadurch gekennzeichnet, dass** die Kraftaufnahme-Stifte (52, 53) im Vorsprung (17) des Körpers (15) montiert sind und sich in einem Winkel zwischen 0° und 15° in Bezug auf eine zur Platte (16) parallelen Ebene erstrecken.

8. Aufhängungsvorrichtung (4) gemäß einem der Ansprüche 5 bis 7, **dadurch gekennzeichnet, dass** das Seitenruder (45) auf artikulierte Weise auf dem Vorsprung (17) des Körpers (15) montiert ist.

9. Aufhängungsvorrichtung (4) gemäß einem der Ansprüche 1 bis 8, **dadurch gekennzeichnet, dass** die dritte Pleuelstange (37) einen ersten Zweig (38) und einen zweiten Zweig (39) umfasst, wobei die genannten Zweige (38, 39) derart dazwischen angeordnet sind, dass ein V gebildet ist, wobei jeder der zwei Zweige (38, 39) ein erstes Ende (40) umfasst, das den genannten Zweigen (38, 39) gemeinsam ist, wobei das erste gemeinsame Ende (40) dazu bestimmt ist, auf dem ersten Teil der Turbomaschine (1) artikuliert zu sein, wobei jeder Zweig (38, 39) ein zweites freies Ende (41, 42) umfasst, das auf dem Körper (15) artikuliert ist, wobei das zweite Ende (41) des ersten Zweigs (38) mit Spiel auf dem Körper (15) artikuliert ist, wobei das zweite Ende (42) des zweiten Zweiges (39) ohne Spiel auf dem Körper (15) artikuliert ist.

10. Propellergruppe für ein Luftfahrzeug, **dadurch gekennzeichnet, dass** es eine Turbomaschine (1), von der ein vorgeschalteter Teil von einem befestigten Teil (2) des Luftfahrzeugs durch eine Aufhängungsvorrichtung (4) gemäß einem der Ansprüche 1 bis 9 aufgehängt ist, umfasst, wobei die Aufhängungsvorrichtung (4) zu der genannten Propellergruppe gehört, und dass die erste Pleuelstange (28) und die zweite Pleuelstange (29) der Aufhängungsvorrichtung vorgeschaltet angeordnet sind.

11. Propellergruppe gemäß Anspruch 10, **dadurch gekennzeichnet, dass** sich ein wenigstens teilweise zylindrisches Gehäuse, das sich entlang der Antriebswellen-Achse (X) der Turbomaschine erstreckt, den ersten Teil der Turbomaschine bildet, auf dem die erste, die zweite und die dritte Pleuelstange (28, 29, 37) artikuliert sind, und ein wenigstens teilweise ringförmiges Gehäuse, das sich entlang einer Ebene erstreckt, die lotrecht zur Antriebswellen-Achse (X) der Turbomaschine ist, den zweiten Teil der Turbomaschine bilden kann, auf dem die vierte Pleuelstange (59) und die fünfte Pleuelstange (60) artikuliert sind.

## Claims

1. Suspension device (4) for a turbomachine (1) comprising:
- a body (15) intended to be attached to a fixed part (2) of an aircraft, extending along a longitudinal axis (A) intended to be parallel to a driving shaft axis (X) of the turbomachine (1) once the suspension device (4) is connected to the turbomachine,
- a first connecting rod (28) and a second connecting rod (29) located in the same transverse plane (P) perpendicular to the longitudinal axis (A) of the body, each comprising a first end (30, 31) articulated with respect to the body (15), and a second end (32, 33) intended to be articulated on a first part of the turbomachine (1),
- a third connecting rod (37) articulated on the body (15) between the first ends (30, 31) of the first and second connecting rods (28, 29) and intended to be articulated on the first part of the turbomachine (1), between the second ends (32, 33) of the first and second connecting rods (28, 29),
- a rudder (45) hinged to the body (15),
- a fourth connecting rod (59) and a fifth connecting rod (60), each extending along an axis of extension (L1, L2) and each comprising a first end (61, 62) articulated on the rudder (45) and a second end (63, 64) intended to be articulated on a second part of the turbomachine (1),
- the points of intersection (P1, P2) between the extension axes (L1, L2) of the fourth and fifth connecting rods (59, 60) and the transverse plane (P) being located between the first connecting rod (28) and the second connecting rod (29) and on either side of the third connecting rod (37) in a transverse direction.

2. Suspension device (4) according to claim 1, **characterised in that** it comprises means (52, 53) for taking up forces, connecting the rudder (45) and the body (15) with play.

3. Suspension device (4) according to claim 2, **characterised in that** the means for taking up forces comprise:
- - a first force take-up pin (52) connecting the body (15) and a first area (50) of the rudder (45) with play, and
- - a second force take-up pin (53) connecting the body (15) with play and a second area (51) of the rudder (45), the first and second force take-up pins (52, 53) being located on either side of the axis (A) of the body (15).

4. Suspension device (4) according to one of claims 1 to 3, **characterised in that** the body (15) comprises a plate (16) intended to be fixed to the fixed part (2) of the aircraft and parallel to the axis (A) of the body (15), the body (15) further comprising a beam (25) integral with an upstream zone of the plate and on which the first and second connecting rods (28, 29) are articulated.

5. Suspension device (4) according to claim 4, **characterised in that** the body (15) further comprises a protrusion (17) projecting from a face of the plate (16) on the same side as the beam (25), integral with a downstream zone of the plate.

6. Suspension device (4) according to claim 4 or 5 in combination with claim 3, **characterised in that** the force take-up pins (52, 53) are mounted in the plate (16) and extend perpendicularly to the plate (16).

7. Suspension device (4) according to claim 4 or 5 in combination with claim 3, **characterised in that** the force take-up pins (52, 53) are mounted in the protrusion (17) of the body (15) and extend at an angle of between 0° and 15° with respect to a plane parallel to the plate (16).

8. Suspension device (4) according to one of claims 5 to 7, **characterised in that** the rudder (45) is mounted in an articulated manner on the protrusion (17) of the body (15).

9. Suspension device (4) according to one of claims 1 to 8, **characterised in that** the third connecting rod (37) comprises a first branch (38) and a second branch (39), said branches (38, 39) being arranged between them so as to form a V, each of the two branches (38, 39) comprising a first end (40) common to said branches (38, 39), the first common end (40) being intended to be articulated on the first part of the turbomachine (1), each branch (38, 39) comprising a second free end (41, 42) articulated on the body (15), the second end (41) of the first branch (38) being articulated with play on the body (15), the second end (42) of the second branch (39) being articulated without play on the body (15).

10. Propelling assembly for an aircraft, **characterised in that** it comprises a turbomachine (1), an upstream part of which is suspended from a fixed part (2) of the aircraft by a suspension device (4) according to one of claims 1 to 9, the suspension device (4) belonging to said propelling assembly, and **in that** the first connecting rod (28) and the second connecting rod (29) are arranged upstream of the suspension device.

11. Propelling assembly according to claim 10, **characterised in that** an at least partially cylindrical casing extending along the drive shaft axis (X) of the turbomachine forms the first part of the turbomachine on which the first, second and third connecting rods (28, 29, 37) are articulated, and an at least partially annular casing extending along a plane perpendicular to the drive shaft axis (X) of the turbomachine can form the second part of the turbomachine on which the fourth connecting rod (59) and the fifth connecting rod (60) are articulated.
